# NEUE EUROPÄISCHE PATENTSCHRIFT

(11) **EP 1 234 493 B2**
(45) Veröffentlichungstag und Bekanntmachung des Hinweises auf die Entscheidung über den Einspruch: **16.09.2009**
(45) Hinweis auf die Patenterteilung: 20.04.2005
(21) Anmeldenummer: 02003495.5
(22) Anmeldetag: 15.02.2002
(51) Int. Cl.: A01D 45/02

(54) **Maschine zum Mähen von stängelartigem Erntegut**
Mowing machine for stem cereals
Machine pour faucher des céréales à tige

(30) Priorität: 22.02.2001 DE 10108505
(43) Veröffentlichungstag der Anmeldung: 28.08.2002
(73) Patentinhaber: Maschinenfabrik Kemper GmbH & Co. KG, 48703 Stadtlohn (DE)
(72) Erfinder: Steppat, Manfred, 48703 Stadtlohn (DE)
(74) Vertreter: Holst, Sönke

(56) Entgegenhaltungen:
- EP-A- 0 673 594
- EP-A- 0 760 200
- GB-A- 2 012 154
- US-A- 5 852 922
- Claas Prospekt: RU 450, reihenunabhängiges Vorsatzgerät, aus dem Jahre 1996. Prospekt Nr. 9/96, Da. 100/190 244.1 der CLAAS Vertriebsgesellschaft MBH

## Beschreibung

Die Erfindung betrifft eine Maschine zum Mähen von stängelartigem Erntegut, nach dem Oberbegriff des Anspruchs 1.

Aus der EP 0 673 594 A ist eine Mähvorrichtung für stängelartiges Halmgut bekannt, die aus um eine etwa vertikale Achse rotierenden Schneidscheiben und darüber angeordneten, zu den Schneidscheiben koaxialen Förderscheiben aufgebaut ist, die mit einer Vielzahl über den Umfang verteilten, taschenförmigen Aussparungen versehen sind. Die Schneidscheiben rotieren und trennen die Stängel der zu erntenden (Mais-) Pflanzen vom Erdboden ab. Die gegensinnig rotierenden Förderscheiben transportieren die Pflanzen in den taschenförmigen Aussparungen nach hinten, wo sie durch an der Oberseite der Förderscheiben angeordnete bügelförmige Ausräumer aus den Aussparungen entnommen und Einzugswalzen eines Feldhäckslers zugeführt werden. Die Ausräumer sind im Einzugsbereich im Abstand von den taschenförmigen Aussparungen angeordnet, verlaufen im Abgabebereich aber so weit nach außen, dass sie die Stängel aus den Aussparungen herausdrücken. Die Schneidscheiben sind mit nach oben stehenden Rippen ausgestattet, welche dazu dienen, den abgeschnittenen Pflanzenstängel nach innen zu weisen und im Wirkungsbereich der taschenförmigen Aussparungen der Förderscheiben zu halten. Die Oberseite der Förderscheiben ist glatt. Außer den Ausräumern ist keine Abdeckung der Förderscheiben vorgesehen.

In der GB 2 012 154 A ist eine andere Mähvorrichtung offenbart, die ebenfalls aus Schneidscheiben mit koaxial darüber angeordneten Förderscheiben aufgebaut ist. Durch Abdeckungen oberhalb und neben den Förderscheiben wird ein nach oben offener Kanal definiert, durch den die aufrecht stehenden Pflanzen nach hinten transportiert und den Einzugswalzen eines Feldhäckslers zugeführt werden. In einer Ausführungsform sind die Förderscheiben plan und am Außenumfang mit taschenförmigen Aussparungen versehen, und in einer anderen Ausführungsform weisen sie um ihren Umfang verteilte, sich etwa radial erstreckende, jedoch etwa auf halber Länge entgegen der Drehrichtung nach hinten abgeknickte Förderzinken auf.

Eine Mähvorrichtung mit einer mit Aussparungen versehenen Förderscheibe und einer darüber angeordneten, feststehenden Abdeckung ist aus der EP 0 824 856 A bekannt. Dort wird vorgeschlagen, eine Einwölbung in der Abdeckung zu öffnen, wenn Ganzpflanzensilage geerntet werden soll, und die Einwölbung beim Ernten von Mais abzudecken.

Als nachteilig ist bei den beschriebenen Mähvorrichtungen anzusehen, dass sich auf den Abdeckungen der Förderscheiben Pflanzenteile ansammeln, die dem Ernteprozess verloren gehen. Ist keine Abdeckung vorhanden, werden Maiskolben und andere Pflanzenteile, die beim Schneide- oder Fördervorgang von der Pflanze abfallen und auf eine Förderscheibe fallen, von der rotierenden Förderscheibe auf den Erdboden geschleudert und gehen somit ebenfalls verloren.

Das der Erfindung zugrunde liegende Problem wird darin gesehen, eine Maschine zum Mähen von stängelartigem Erntegut dahingehend zu verbessern, dass die Verluste an Erntegut reduziert sind.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Ende der Abdeckung ist dem Materialstrom des von der Maschine aufgenommenen Ernteguts benachbart. Es kann beispielsweise bezüglich der Vorwärtsbewegung der Maschine im rückwärtigen oder seitlichen Bereich der Förderscheibe liegen, insbesondere nahe der Mitte zweier benachbarter, gegensinnig rotierender Förderscheiben, zwischen denen die Pflanzen eingezogen werden. In diesem Fall sind Teile der Abdeckung (auch) am vorderen Rand der Förderscheiben angeordnet.

Falls die Fliehkräfte bei geringen Drehgeschwindigkeiten der Förderscheibe klein sind, bietet es sich weiterhin an, Maßnahmen zu treffen, um Pflanzenteile aktiv von der Förderscheibe zu entfernen. Es wird daher vorgeschlagen, dass die Abdeckung eine in Drehrichtung vorlaufende Kante aufweist, die auf der Förderscheibe liegende Pflanzenteile nach außen abräumt und einem von der Maschine aufgenommenen Erntegutfluss aufgibt. Diese im Folgenden als mittlere Abdeckung bezeichnete Abdeckung weist somit eine vorlaufende Kante auf, die sich in radialer Richtung über die Förderscheibe erstreckt. Sie muss sich nicht exakt radial erstrecken, sondern kann im (nachlaufenden) Winkel zum Radius angeordnet oder entgegen der Drehrichtung, also nachlaufend, gekrümmt sein. Die vorlaufende Kante endet ebenfalls in der Nähe des von der Maschine bereits aufgenommenen Erntegutflusses. Die mittlere Abdeckung kann mit der äußeren Abdeckung einteilig ausgeformt oder ein separates Element sein.

Weiterhin ist vorgeschlagen, eine innere Abdeckung oberhalb des radial inneren Bereichs der Förderscheibe anzuordnen ist. Aus diesem Bereich können dort ansammelnde Pflanzenteile (aufgrund der dort geringen Winkelgeschwindigkeit der Förderscheibe) nicht durch Fliehkräfte selbsttätig abtransportiert werden. Durch die innere Abdeckung vermeidet man, dass sich Erntegut im radial inneren Bereich der Förderscheibe ansammelt. Die innere Abdeckung kann auch zur Lagerung der Förderscheibe und/oder zur Aufnahme eines Antriebsstrangs der Förderscheibe dienen, wenn sie feststeht. Sie kann aber auch mit der Förderscheibe rotieren. Die innere Abdeckung kann mit der mittleren und/oder äußeren Abdeckung einteilig ausgeformt oder ein separates Element sein.

Ist eine innere und eine äußere Abdeckung vorgesehen, verbleibt dazwischen ein Ausschnitt, der an seinem bezüglich der Drehrichtung der Förderscheibe stromab liegenden Ende offen ist. In den Ausschnitt gelangende Pflanzenteile werden durch die Drehbewegung der Förderscheibe mitgeführt und am stromab liegenden Ende des Ausschnitts dem Materialstrom des Ernteguts zugefügt. Der Ausschnitt ist vorzugsweise der Drehbewegung der Förderscheibe angepasst und somit (von oben betrachtet) bogenförmig gestaltet.

Wenn die innere, mittlere und/oder äußere Abdeckung entsprechend gewölbt sind, können auf sie fallende Pflanzenteile selbsttätig auf die Förderscheibe gelangen, von der sie selbsttätig abtransportiert werden.

Um den Abtransport der Pflanzenteile durch die Förderscheibe zu verbessern, bietet sich an, die Oberseite einer ansonsten glatten, nur im Randbereich mit taschenförmigen Aussparungen versehenen Förderscheibe mit wenigstens einem Mitnehmerelement zu versehen, das zum Abtransport von Pflanzenteilen eingerichtet ist. Falls mehrere Förderscheiben übereinander angeordnet sind, reicht es in der Regel aus, die jeweils oberste Förderscheibe mit einem Mitnehmerelement oder mehreren Mitnehmerelementen zu versehen. Sollen die Förderscheiben aus Gründen rationeller Fertigung und Bevorratung gleichartig sein, können aber auch alle Förderscheiben mit Mitnehmerelementen ausgestattet sein. Das Mitnehmerelement ist eine Rippe, die auf der Förderscheibe befestigt wird.

Um zu erreichen, dass das Mitnehmerelement mitgeführte Pflanzenteile wieder abgibt, um sie dem Materialstrom des Ernteguts zufügen zu können, bietet sich an, das Mitnehmerelement mit einem abweisenden Förderverhalten zu versehen. Dazu kann es um einen nacheilenden Winkel gegenüber der Radialen auf der Förderscheibe angebracht sein.

Zwischen der Förderscheibe und der Abdeckung verbleibt vorzugsweise nur ein geringer vertikaler Spalt, in dem sich nur wenig unerwünschte Pflanzenteile ansammeln können.

In der Zeichnung ist ein nachfolgend näher beschriebenes Ausführungsbeispiel der Erfindung dargestellt. Es zeigt:

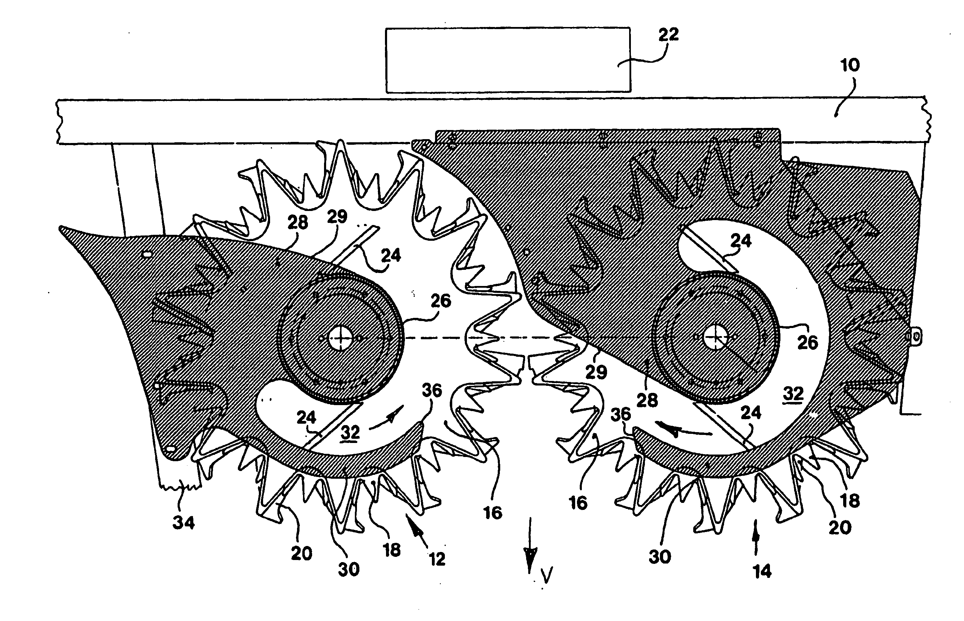

- Fig. 1: eine Draufsicht auf eine erfindungsgemäße Maschine zum Mähen von stängelartigem Erntegut.

In Figur 1 ist eine Maschine zum Mähen von stängelartigem Erntegut dargestellt. An einem Rahmen 10 stützen sich zwei Einzugs- und Mäheinrichtungen 12, 14 ab, die in an sich bekannter Weise drei übereinander angeordnete, durch einen Antrieb um eine gemeinsame, etwa vertikale Achse in Drehung versetzbare Förderscheiben 16, 18, 20 aufweisen, unter denen jeweils eine um dieselbe Achse rotierende, in der Zeichnung aus Gründen der Übersichtlichkeit nicht mit eingezeichnete Schneidscheibe angeordnet ist. Die Förderscheiben 16, 18, 20 sind an ihrem Umfang mit taschenförmigen Aussparungen versehen, die zur Aufnahme von Pflanzenstängeln dienen, welche mittels der Schneidscheibe vom Boden abgetrennt werden. Die links eingezeichnete Einzugs- und Mäheinrichtung 12 dreht sich im Gegenuhrzeigersinn und die rechts eingezeichnete Einzugs- und Mäheinrichtung 14 dreht sich im Uhrzeigersinn, wie durch die Pfeile angedeutet. Sie transportieren die abgeschnittenen Pflanzen entgegen der Vorwärtsbewegungsrichtung V nach hinten, wo die Pflanzen durch geeignete, in der Zeichnung nicht wiedergegebene Ausräumer aus den Förderscheiben 16, 18, 20 herausgeholt und von Vorpresswalzen 22 eines Feldhäckslers eingezogen werden, der den Rahmen 10 trägt. Der Rahmen 10 kann auch mehr als die zwei eingezeichneten Einzugs- und Mäheinrichtungen 12, 14 aufweisen, die seitlich nebeneinander angeordnet sind, wobei der Quertransport der Pflanzen zu den Vorpresswalzen 22 in an sich bekannter Weise entlang der Rückwand des Rahmens 10 oder durch eine Schnecke erfolgt. Der Drehantrieb der Förderscheiben 16, 18, 20 und der Schneidscheiben erfolgt durch den Feldhäcksler, der die Maschine beim Erntevorgang in Vorwärtsbewegungsrichtung V über ein Feld transportiert.

Oberhalb der obersten Förderscheiben 16 ist jeweils eine innere Abdeckung 26 angeordnet, die mit dem Rahmen 10 verbunden ist und eine Nabe der Förderscheibe 16 überdeckt. Die Nabe ist an der inneren Abdeckung 26 gelagert. Außerdem ist oberhalb der obersten Förderscheiben 16 an der in Vorwärtsbewegungsrichtung V vorderen Seite der Einzugs- und Mähvorrichtungen 12, 14 eine bogenförmige äußere Abdeckung 30 angebracht, die sich ebenfalls am Rahmen 10 abstützt. Ein Ende 36 der äußeren Abdeckung 30 befindet sich jeweils oberhalb der einander zugewandten Seiten der Förderscheiben 16. Die innere Abdeckung 26 und die äußere Abdeckung 30 sind durch eine mittlere Abdeckung 28 miteinander verbunden. Die mittlere Abdeckung 28 weist eine (bezüglich der Drehrichtung der Förderscheibe 16) vorlaufende Kante 29 auf, die sich etwa tangential von der inneren Abdeckung über die radiale Abmessung der Förderscheibe 16 nach außen erstreckt. Die vordere Kante 29 ist leicht entgegen der Drehrichtung der Förderscheibe 16 gekrümmt. Die innere Abdeckung 26, die mittlere Abdeckung 28 und die äußere Abdeckung 30 sind in der dargestellten Ausführungsform einteilig; sie könnten aber auch als separate Elemente hergestellt sein.

Zwischen der inneren Abdeckung 26 und der äußeren Abdeckung 30 verbleibt (über den nicht von der mittleren Abdeckung 28 überdeckten Teilen der Förderscheibe 16) ein nach oben offener, bogenförmiger Ausschnitt 32, der die innere Abdeckung 26 azimutal umläuft und an seinem in Drehrichtung der Förderscheiben 16 stromab liegenden Ende offen und am stromauf liegenden Ende geschlossen ist. Zwischen den Abdeckungen 26, 28 und 30 und den Oberseiten der obersten Förderscheiben 16 verbleibt nur ein geringer vertikaler Spalt, in dem sich nur wenig Erntematerial ansammeln kann. Die Abdeckungen 26, 28 und 30 sind zweckmäßigerweise derart gewölbt, dass auf sie fallende Pflanzenteile in den Ausschnitt 32 rutschen können.

In der in Figur 1 dargestellten Ausführungsform sind die äußeren Abdeckungen 30 der linken und rechten Einzugs- und Mähvorrichtungen 12, 14 nicht symmetrisch zueinander, da die äußere Abdeckung 30 der rechten Einzugs- und Mähvorrichtung 14 sich bis über die Mitte des Einzugskanals erstreckt und der Ausschnitt 32 um einen Winkelbereich von etwa 200° um die innere Abdeckung 26 umläuft, während die äußere Abdeckung 30 der linken Einzugs- und Mähvorrichtung 12, 14 nur an einer in Vorwärtsbewegungsrichtung V orientierten, mit dem Rahmen 10 verbundenen Strebe 34 befestigt ist und einen die innere Abdeckung 26 nur um etwa 60° umlaufenden Ausschnitt 32 aufweist. Es ist aber auch denkbar, die Abdeckungen symmetrisch zu gestalten.

An der Oberseite der obersten Förderscheiben 16 sind jeweils zwei sich diametral gegenüberliegende Mitnehmerelemente 24 in Form von nach oben überstehenden Rippen angeordnet, die gegenüber dem Radius der Förderscheiben 16 um einen Winkel von etwa 60° nacheilend angeordnet sind. Das Förderverhalten der Mitnehmerelemente 24 ist daher abweisend. Die Mitnehmerelemente 24 erstrecken sich geradlinig vom äußeren Rand einer Nabe 26 der Förderscheiben 16 bis fast zum äußeren Rand der Förderscheiben 16. Die radialen Abmessungen des Ausschnitts 32 entsprechen den radialen Abmessungen der Mitnehmerelemente 24.

Die Wirkungsweise der erfindungsgemäßen Einzugs- und Mäheinrichtungen 12, 14 ist wie folgt: Die Schneidscheiben trennen die Pflanzenstängel vom Erdboden ab. Die Förderscheiben 16, 18, 20 nehmen die Pflanzenstängel in den über ihren Umfang verteilten taschenförmigen Aussparungen auf und führen sie den Einzugswalzen 22 zu. Falls Kolben oder andere Pflanzenteile herunterfallen, fallen sie auf die Abdeckungen 26, 28, 30, von wo aus sie in den Ausschnitt 32 rutschen, oder direkt in den Ausschnitt 32. Die Oberfläche der Förderscheibe 16 - unterstützt durch die Mitnehmerelemente 24 - fördert die Pflanzenteile dann auf die Zuführwalzen 22 zu. Die äußeren Abdeckungen 30 führen die Pflanzenteile im Ausschnitt 32 und verhindern, dass sie von der Förderscheibe 16 hinunterfallen, bevor sie in den Erntegutstrom gelangen können. Die Pflanzenteile werden aufgrund der abweisenden Förderwirkung der Mitnehmerelemente 24 am stromab liegenden Ende 36 der äußeren Abdeckungen 30 von den Förderscheiben 16 hinuntergeworfen und vom Materialstrom der geernteten Pflanzen mitgeführt. Eventuell auf der Förderscheibe 16 verbliebene Pflanzenteile werden von den als Abräumer wirkenden, vorderen Kanten 29 der inneren Abdeckungen 28, die sich von der mittleren Abdeckung 26 bis zu den taschenförmigen Aussparungen am Rand der Förderscheiben 16 erstrecken, nach außen transportiert und von den Förderscheiben 16 in den Materialstrom des geernteten Guts hinunter geworfen. Sie erreichen somit problemlos die Vorpresswalzen 22 und den Feldhäcksler.

Im Ergebnis erhält man eine Maschine zum Mähen von stängelartigem Erntegut, bei der die Materialförderung verbessert ist. Die Maschine kann ohne Umbau auch zum Ernten von Ganzpflanzensilage oder Lagermais verwendet werden.

## Patentansprüche

1. Maschine zum Mähen von stängelartigem Erntegut, mit einer um eine etwa vertikale Achse in Drehung versetzbaren Förderscheibe (16), die mit über den Umfang verteilten, zur Aufnahme von Pflanzenstängeln eingerichteten Aussparungen ausgestattet ist, und über der eine feststehende Abdeckung (28) angeordnet ist, die einen Teil der Oberfläche der Förderscheibe (16) überdeckt und eine in Drehrichtung der Förderscheibe (16) vordere Kante (29) aufweist, die auf der Förderscheibe (16) liegende Pflanzenteile nach außen abräumt und in einen von der Maschine aufgenommenen Erntegutfluss abgibt, **dadurch gekennzeichnet, dass** die Oberseite der Förderscheibe (16) mit mindestens einem Mitnehmerelement (24) in Form einer auf der Förderscheibe (16) befestigten Rippe zum Abtransport von Emtegutteilen versehen ist, und dass das Mitnehmerelement (24) um einen nacheilenden Winkel gegenüber der Radialen auf der Förderscheibe (16) angebracht ist.

2. Maschine nach Anspruch 1, **dadurch gekennzeichnet, dass** eine innere Abdeckung (26) den radial inneren Bereich der Förderscheibe (16) abdeckt.

3. Maschine nach Anspruch 2, **dadurch gekennzeichnet, dass** die Oberseite der Förderscheibe (16) an der inneren Abdeckung (26) gelagert ist.

4. Maschine nach Anspruch 2 oder 3, **dadurch gekennzeichnet, dass** ein bogenförmiger Ausschnitt (32) zwischen der inneren Abdeckung (26) und der äußeren Abdeckung (30) geformt ist.

5. Maschine nach einem der vorhergehenden Ansprüche, **dadurch gekennzeichnet, dass** die Abdeckung (26, 28, 30) derart gewölbt ist, dass auf sie fallende Pflanzenteile auf die Förderscheibe (16) rutschen können.

## Claims

1. A machine for mowing a stalk-like crop, with a conveyor disc (16) which can be rotated about a substantially vertical axis and which is provided with pockets distributed over the periphery for receiving plant stalks and over which is arranged a fixed cover (28) which covers a part of the surface of the conveyor disc (16) and has an edge (29) leading in the direction of rotation of the conveyor disc (16) which clears outwards plant parts lying on the conveyor disc (16) and delivers them into a crop flow received by the machine, **characterized in that** the upper side of the conveyor disc (16) is provided with at least one entraining element (24) in the form of a vane for carrying off crop parts, and that the entraining element (24) is mounted in a lagging angle with respect to the radial on the conveyor disc (16).

2. A machine according to claim 1, **characterized in that** an inner cover (26) covers the radially inner region of the conveyor disc (16).

3. A machine according to claim 2, **characterized in that** the upper side of the conveyor disc (16) is journalled on the inner cover (26).

4. A machine according to claim 2 or 3, **characterized in that** an arcuate cut-out (32) is formed between the inner cover (26) and the outer cover (30).

5. A machine according to any of the preceding claims, **characterized in that** the cover (26, 28, 30) is so domed that plant parts falling on it can slide on to the conveyor disc (16).

## Revendications

1. Machine destinée à faucher des produits de récolte à tiges, comportant un disque de transport (16) pouvant être entraîné en rotation autour d'un axe environ vertical, qui comporte des évidements, répartis sur la périphérie et destinés à recevoir les tiges des produits de récolte, et au-dessus duquel est agencé un cache (28) fixe, qui couvre une zone de la surface du disque de transport (16) et comporte un bord avant (29) dans le sens de rotation du disque de transport (16), qui balaye vers l'extérieur les parties de tige situées sur le disque de transport (16) et les pousse dans un flux de récolte ramassé par la machine, **caractérisée en ce que** la face supérieure du disque de transport (16) comporte au moins un élément d'entraînement (24) dans la forme d'une nervure fixé sur la disque de transport (16) pour évacuer les produits récoltés, et **en ce que** l'élément d'entraînement (24) est fixé sur la disque de transport (16) formant avec le rayon du disque de transport (16) un angle ouvert vers l'arrière.

2. Machine selon revendication 1, **caractérisée en ce qu'**un cache intérieur (26) couvre la zone intérieure radiale du disque de transport (16).

3. Machine selon la revendication 2, **caractérisée en ce que** la face supérieure du disque de transport (16) est coussiné au cache intérieur (26).

4. Machine selon la revendication 2 ou 3, **caractérisée en ce qu'**une découpe (32) courbe est réalisée entre le cache intérieur (26) et le cache extérieur (30).

5. Machine selon l'une quelconque des revendications précédentes, **caractérisée en ce que** le cache (26, 28, 30) a une forme convexe de telle sorte que les parties de tige tombant sur celui-ci peuvent glisser sur le disque de transport (16).
